# EUROPÄISCHE PATENTSCHRIFT

(11) **EP 0 614 054 B1**
(45) Veröffentlichungstag und Bekanntmachung des Hinweises auf die Patenterteilung: **23.04.1997**
(21) Anmeldenummer: 94102117.2
(22) Anmeldetag: 11.02.1994
(51) Int. Cl.: F24D 3/10

(54) **Vorrichtung zum Verschliessen der Wasserbäder von Erwärmungsvorrichtungen**
Device for closing water baths of heating installations
Dispositif de fermeture des bains d'eau des installations de chauffage

(30) Priorität: 27.02.1993 DE 4306197
(43) Veröffentlichungstag der Anmeldung: 07.09.1994
(73) Patentinhaber: RUHRGAS AKTIENGESELLSCHAFT, 45138 Essen (DE)
(72) Erfinder: Lembser, Gerhard, Dipl.-Ing., D-53639 Königswinter (DE)

(56) Entgegenhaltungen:
- EP-A- 0 024 771
- DE-U- 8 710 347
- FR-A- 1 390 095

## Beschreibung

Die Erfindung betrifft eine Vorrichtung zum Verschließen der Wasserbäder von Erwärmungsvorrichtungen.

Erwärmungsvorrichtungen, bei welchen Wasserbäder verwendet werden, sind an sich bekannt. Beispielsweise werden derartige Erwärmungsvorrichtungen bei Erdgasvorwärmanlagen, sogenannten Heatern verwendet. Die industriell verwendeten Wasserbäder sind in der Regel offen, wodurch Sauerstoff eintreten kann, was beispielsweise Korrosion an Druck- und Flammrohren bewirkt, und was gleichzeitig Verdampfungsverluste mit sich bringt, so daß das Wasserniveau regelmäßig ausgeglichen werden muß.

Es ist durchaus bekannt, entsprechende Wasserbäder in geschlossenen Behältern anzuordnen, welche aber zur Druckkompensation volumenveränderlich und damit sehr aufwendig auszugestalten sind. Als Druckbegrenzungssicherung wird Üblicherweise eine Berstscheibe eingesetzt. Diese bekannte Anordnung zum Verschließen des Wasserbades erfordert einen technisch und wirtschaftlich sehr hohen Aufwand. Wasserbäder mit Vorrichtungen zum Druckkompensation sind z.b. in den EP-A-0 024 771 und FR-A-1 390 095 beschrieben.

Davon ausgehend liegt der Erfindung die Aufgabe zugrunde, eine Vorrichtung zum Verschließen der Wasserbäder von Erwärmungsvorrichtungen bereitzustellen, mit welcher ein dichter Verschluß bei geringem baulichen und wirtschaftlichen Aufwand erzielt werden kann, und welche auch zur Nachrüstung bestehender Wasserbäder von Erwärmungsvorrichtungen geeignet ist.

Als technische **Lösung** wird eine Vorrichtung zum Verschließen der Wasserbäder von Erwärmungsvorrichtungen angegeben, welche ein elastisches Dichtelement aufweist, welches auf der offenen Wasserbadoberfläche schwimmt und in deren Randbereich am Wasserbadgehäuse dichtend anliegt. Das Dichtelement besteht wenigstens in seinem am Wasserbadgehäuse anliegenden Randbereich aus einer mit einem Medium gefüllten Hülle aus einem elastischen Material.

Durch diese technisch sehr einfach zu realisierende Maßnahme wird mit geringem Aufwand verhindert, daß bei Wasserbädern Korrosion durch Sauerstoffeintritt stattfindet oder Verdampfungsverluste auftreten. Trotzdem kann wegen der vertikalen Beweglichkeit des Dichtelementes entlang der Wasserbadgehäusewand ein Druckausgleich stattfinden.

Zweckmäßigerweise ist die Hülle aus einem elastischen Kunststoffmaterial hergestellt und mit einem geeigneten Gasvolumen und/oder einer geeigneten Flüssigkeit gefüllt, so daß sie die gewünschten Schwimm- und Dichteigenschaften erhält. Gas und Flüssigkeit sind zweckmäßigerweise umweltverträglich, verwendete Flüssigkeiten vorzugsweise frostsicher.

Das Eigengewicht der Füllung des Dichtelementes erzeugt einen gleichbleibenden definierten radialen Druck auf die Behälterwand, wodurch eine gute Abdichtung und ein Ausgleich von Unebenheiten resultiert. Zudem wird die Verkantung des Dichtelementes bei Vertikalbewegung verhindert. Weiterhin bewirkt der radiale Druck auf die Behälterwand einen Wischeffekt, wodurch Haftwasser an der Behälterwand minimiert wird.

In einer vorzugsweisen Ausgestaltungsform der Erfindung ist das Dichtelement ein mediumgefüllter Körper, welcher die offene Wasseroberfläche vollständig abdeckt. Durch die Gestaltung entsprechender Hüllen können mediumgefüllte Kugeln, Kissen oder Platten als Dichtelement verwendet werden.

Gemäß einer alternativen Ausgestaltungsform der Erfindung ist das Dichtelement ein am Randbereich der offenen Wasserbadoberfläche entlanglaufender, mediumgefüllter Rahmen, dessen offene Innenfläche mit einem Zusatzelement verschlossen ist. Ein Ring oder ein Schlauch, aber auch eckige mediumgefüllte Rahmen können verwendet werden, und das Zusatzelement kann gemäß einer bevorzugten Ausgestaltungsform eine mit dem Rahmen einstückig ausgebildete Membran sein. Es kann jedoch auch eine nachträglich luftdicht auf den Rahmen aufgebrachte Platte sein. Gemäß einer bevorzugten Ausgestaltungsform ist das Zusatzelement sauerstoffundurchlässig.

Wenn das Dichtelement an seinem am Wasserbadgehäuse anliegenden Rand abgerundet ist, wird eine besonders gute und dauerhafte Dichtwirkung erzielt, wobei gleichzeitig die zwischen Dichtelement und Wasserbadgehäuse entstehende Reibung verringert wird. Gemäß einer weiteren vorteilhaften Ausgestaltung der Erfindung ist am Dichtelement ein Ventil zur Entlüftung des unter dem Dichtelement liegenden Raumes angeordnet. Aufgrund der im Wasserbad herrschenden Temperaturen kann sich unterhalb des Dichtelementes leicht eine Gasschicht bilden, welche dann wunschgemäß durch das Entlüftungsventil entspannt werden kann.

Zur Erzielung einer gewünschten Schwimmfähigkeit und der notwendigen Dichtwirkung kann es gemäß einer vorteilhaften Ausgestaltung der Erfindung von Vorteil sein, das Dichtelement auf einen zusätzlichen Schwimmkörper aufzulegen. Ebenso kann es von Vorteil sein, auf dem Dichtelement einen Belastungskörper anzuordnen, welcher das Dichtelement etwas tiefer in die Wasserbadoberfläche drückt.

Gemäß einer vorteilhaften Ausgestaltung der Erfindung ist am Dichtelement eine Vorrichtung zur Funktionskontrolle angeordnet, mit welcher die Dichtwirkung überprüft werden kann. Schließlich wird mit Vorteil angegeben, daß das Dichtelement in einem Teil des Wasserbadgehäuses angeordnet ist, beispielsweise im Bereich eines Mengenausgleichsgefäßes, in welchem die offene Wasserbadoberfläche verkleinert ist. Dabei kann es sich bei dem Gefäß um ein vertikales Gefäß handeln, in welchem sich der Dichtkörper bewegt, und welches dem volumetrischen Ausgleich der Flüssigkeit in dem Vorwärmbehälter durch Temperatureinwirkung dient.

Weitere Vorteile und Merkmale der Erfindung ergeben sich aus der folgenden Beschreibung anhand der Figuren. Dabei zeigen:
- Fig. 1: eine schematische Darstellung einer Wasserbadvorrichtung mit einer erfindungsgemäßen Verschlußvorrichtung;
- Fig. 2a bis 2e: verschiedene Ausführungsbeispiele erfindungsgemäßer Dichtelemente; und
- Fig. 3: eine vergrößerte schematische Ansicht des Ausgleichsbehälters gemäß Fig. 1 gemäß einer alternativen Ausgestaltung der Erfindung.

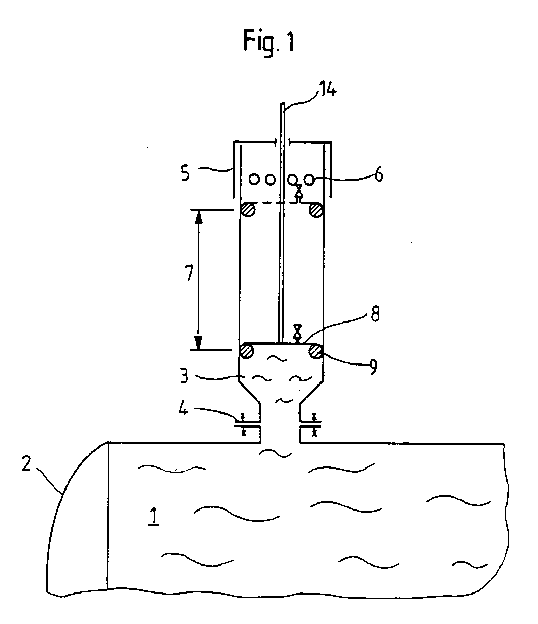

Fig. 1 zeigt ein in herkömmlichen Erwärmungsvorrichtungen, beispielsweise einer Erdgasvorwärmanlage, zu verwendendes Wasserbad 1, bei welchem entsprechend temperierte Flüssigkeit in einem Wasserbadgehäuse 2 zur Erwärmung entsprechender Medien genutzt wird. Gemäß dem gezeigten Ausführungsbeispiel ist die offene Wasserbadoberfläche dadurch verkleinert, daß ein Ausgleichsbehälter 3 oberhalb des Wasserbadgehäuses 2 mittels einer an sich bekannten Flanschbefestigung 4 angeordnet ist. Die zu verschließende Wasseroberfläche ist somit in vorteilhafter Weise erheblich verkleinert. Der Ausgleichsbehälter 3 ist an seiner Oberseite mit einem Wetterschutz 5 versehen und weist Entlastungsöffnungen 6 auf.

Die Wasserbadoberfläche bzw. der Wasserstand soll vorzugsweise zwischen einem unteren Minimalbereich und einem oberen Maximalbereich liegen, so daß sich zwischen beiden der Hub 7 ergibt. Auf der Wasserbadoberfläche ist das Dichtelement 8 angeordnet, welches gemäß dem gezeigten Ausführungsbeispiel aus einem Ring mit einer verschließenden Membran besteht. An der Membran ist eine Stellungsanzeige 14 befestigt, welche den Wetterschutz 5 nach oben optisch sichtbar durchstößt.

Der Ausgleichsbehälter 3 ist in bevorzugter Weise zylindrisch und besteht aus einem an der Innenseite möglichst glatten Rohr, beispielsweise aus Kunststoff oder Stahl mit einer Innenbeschichtung. Das Dichtelement 8 ist vorzugsweise aus einem Kunststoff hergestellt, welche ohne große Reibung an der Innenwand des Behälters verschiebbar ist, aber dennoch abdichtend an der Wand anliegt.

Fig. 2a bis 2e zeigen verschiedene Ausführungsformen für Dichtelemente oder deren Anordnung. Gemäß Fig. 2a besteht das Dichtelement aus einem Dichtungskörper 9, welcher ein einzelner mediumgefüllter Körper ist, der die offene Wasserbadoberfläche vollständig abdeckt. Gemäß Fig. 2b ist der mediumgefüllte Dichtungskörper 9 ein Kissen bzw. eine Scheibe.

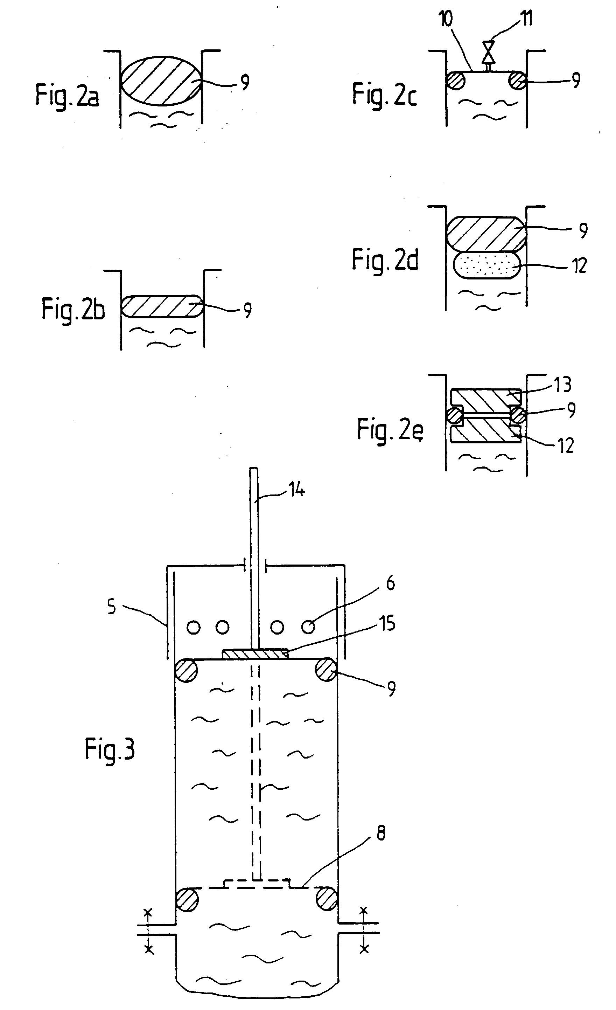

Ein alternatives Ausführungsbeispiel zeigt die Fig. 2c, in welcher der Dichtungskörper 9 ein mediumgefüllter Ring ist, dessen Innenöffnung mit dem Zusatzelement 10, beispielsweise einer elastischen Kunststoffmembran, verschlossen ist. Im Bereich des Zusatzelementes 10 ist ein Entlüftungsventil 11 angeordnet.

Fig. 2d zeigt einen Dichtungskörper 9, beispielsweise gemäß Fig. 2a und 2b, welcher von einem Auftriebskörper 12 beim Schwimmen auf der Wasserbadoberfläche unterstützt wird.

Die Wasserbadflüssigkeit kann ohne weiteres ein spezielles Gewicht größer 1,0 kp/dm³ aufweisen. Beispielsweise im Falle einer Erdgasvorwärmeinrichtung besteht die Flüssigkeit aus einer Mischung von Wasser, Glykol und Korrosionsinhibitoren.

Das Medium innerhalb der Dichtkörper 9 ist in diesem Falle beispielsweise eine Flüssigkeit, welche dann umweltverträglich und frostsicher ausgewählt werden muß.

Fig. 2e zeigt eine Ausführungsform, bei welcher im wesentlichen ein Dichtelement gemäß Fig. 2c verwendet wird, welches einerseits auf einem Auftriebskörper 12 schwimmt, andererseits aber durch einen Belastungskörper 13 austariert ist.

Wie in Fig. 3 gezeigt, kann eine Stellungsanzeige 14 auf der Membran eines Dichtelementes 8 angeordnet sein, welche den Wetterschutz 5 nach oben durchstößt. Dadurch hat der Bediener eine optische Stellungsanzeige. Wird die Stellungsanzeige 14 jedoch auf einen Schwimmkörper 15 oberhalb des Dichtelementes 8 angeordnet, so dient er, beispielsweise im Zusammenhang mit einer Sichtöffnung, gleichzeitig als Funktionskontrolle. Hängt nämlich beispielsweise das Dichtelement in einem unteren Bereich und wird bereits von Wasserbadflüssigkeit überspült, so schwimmt der Schwimmkörper 15 mit Stellungsanzeige 14 auf und der Betrachter kann diesen Widerspruch erkennen.

Mit den gezeigten Ausführungsbeispielen lassen sich Wasserbäder effektiv und ohne großen wirtschaftlichen Aufwand verschließen. Der radiale Abdichtdruck kann dabei sowohl durch das spezifische Gewicht der Füllung als auch durch das Gewicht des Belastungskörpers beliebig verändert werden.

## Patentansprüche

1. Vorrichtung zum Verschließen der Wasserbäder von Erwärmungsvorrichtungen, gekennzeichnet durch ein elastisches Dichtelement (8), welches auf der offenen Wasserbadoberfläche schwimmt und in deren Randbereich am Wasserbadgehäuse (2,3) dichtend anliegt, und welches wenigstens in seinem am Wasserbadgehäuse anliegenden Randbereich aus einer mit einem Medium gefüllten Hülle (9) aus einem elastischen Material besteht.

2. Vorrichtung nach Anspruch 1, dadurch gekennzeichnet, daß das Dichtelement (8) ein mediumgefüllter Körper (9) ist, welcher die offene Wasserbadoberfläche vollständig abdeckt.

3. Vorrichtung nach Anspruch 1, dadurch gekennzeichnet, daß das Dichtelement (8) ein am Randbereich der offenen Wasserbadoberfläche entlanglaufender, mediumgefüllter Rahmen (9) ist, dessen offene Innenfläche mit einem Zusatzelement (10) verschlossen ist.

4. Vorrichtung nach Anspruch 3, dadurch gekennzeichnet, daß das Zusatzelement (10) sauerstoffundurchlässig ist.

5. Vorrichtung nach einem der Ansprüche 3 oder 4, dadurch gekennzeichnet, daß das Zusatzelement (10) eine mit dem Rahmen (9) einstückig ausgebildete Membran ist.

6. Vorrichtung nach einem der vorhergehenden Ansprüche, dadurch gekennzeichnet, daß das Dichtelement (8) an seinem am Wasserbadgehäuse anliegenden Rand abgerundet ist.

7. Vorrichtung nach einem der vorhergehenden Ansprüche, dadurch gekennzeichnet, daß am Dichtelement ein Ventil (11) zur Entlüftung des unter dem Dichtelement (8) liegenden Raumes angeordnet ist.

8. Vorrichtung nach einem der vorhergehenden Ansprüche, dadurch gekennzeichnet, daß das Dichtelement (8) auf einem Auftriebskörper (12) aufliegt.

9. Vorrichtung nach einem der vorhergehenden Ansprüche, dadurch gekennzeichnet, daß auf dem Dichtelement ein Belastungskörper (13) angeordnet ist.

10. Vorrichtung nach einem der vorhergehenden Ansprüche, dadurch gekennzeichnet, daß am Dichtelement eine Vorrichtung zur Funktionskontrolle (14) angeordnet ist.

11. Vorrichtung nach einem der vorhergehenden Ansprüche, dadurch gekennzeichnet, daß das Dichtelement in einem Teil (3) des Wasserbadgehäuses angeordnet ist, in welchem die offene Wasserbadoberfläche verkleinert ist.

## Claims

1. Device for closing water baths of heating installations, characterised by an elastic sealing element (8) which floats on the open water bath surface and rests tight against the edges of the water bath housing (2, 3), at least the edges of said sealing element which rest against the water bath housing consisting of a sleeve (9) made of elastic material and filled with a medium.

2. Device according to claim 1, characterised in that the sealing element (8) is a medium-filled body (9) which completely covers the open water bath surface.

3. Device according to claim 1, characterised in that the sealing element (8) is a medium-filled frame (9) which runs along the edge of the open water bath surface and whose open inner surface is sealed with an additional element (10).

4. Device according to claim 3, characterised in that the additional element (10) is impermeable to oxygen.

5. Device according to either claim 3 or 4, characterised in that the additional element (10) is a membrane which, together with the frame (9), forms one piece.

6. Device according to any one of the aforementioned claims, characterised in that the edge of the sealing element (8) resting against the water bath housing is rounded.

7. Device according to any one of the aforementioned claims, characterised in that a valve (11) for venting the space under the sealing element (8) is arranged on the sealing element.

8. Device according to any one of the aforementioned claims, characterised in that the sealing element (8) rests on a buoy (12).

9. Device according to any one of the aforementioned claims, characterised in that a ballast element (13) is arranged on the sealing element.

10. Device according to any one of the aforementioned claims, characterised in that a function control (14) is arranged on the sealing element.

11. Device according to any one of the aforementioned claims, characterised in that the sealing element is arranged in a part (3) of the water bath housing in which the open water bath surface is reduced.

## Revendications

1. Dispositif d'obturation des bains d'eau d'installations de chauffage, caractérisé par un élément élastique d'étanchéité (8) flottant sur la surface nue d'eau et étant collé aux extrémités de celle-ci de façon étanche contre le bord du réservoir du bain d'eau (2, 3), et consistant au moins à sa partie adjacente au réservoir du bain d'eau d'une enveloppe remplie d'un fluide (9) en matériau élastique.

2. Dispositif selon la revendication 1, caractérisé par le fait que l'élément d'étanchéité (8) est constitué d'un corps rempli d'un fluide (9) couvrant entièrement la surface nue d'eau.

3. Dispositif selon la revendication 1, caractérisé par le fait que l'élément d'étanchéité (8) est constitué d'un cadre rempli d'un fluide (9) s'étendant le long du bord de la surface nue d'eau et dont la surface intérieure découverte est obturée par un élément additionnel (10).

4. Dispositif selon la revendication 3, caractérisé par le fait que l'élément additionnel (10) est imperméable à l'oxygène.

5. Dispositif selon l'une des revendications 3 ou 4, caractérisé par le fait que l'élément additionnel (10) forme avec le cadre (9) une seule pièce conçue sous forme de membrane.

6. Dispositif selon l'une des revendications mentionnées ci-dessus, caractérisé par le fait que le bord de l'élément d'étanchéité (8) collé contre le réservoir du bain d'eau est arrondi.

7. Dispositif selon l'une des revendications mentionnées ci-dessus, caractérisé par le fait qu'au niveau de l'élément d'étanchéité est disposée une vanne (11) permettant de purger l'espace située en dessous de l'élément d'étanchéité (8).

8. Dispositif selon l'une des revendications mentionnées ci-dessus, caractérisé par le fait que l'élément d'étanchéité (8) repose sur un flotteur (12).

9. Dispositif selon l'une des revendications mentionnées ci-dessus, caractérisé par le fait qu'un corps de charge (13) est disposé sur l'élément d'étanchéité.

10. Dispositif selon l'une des revendications mentionnées ci-dessus, caractérisé par le fait qu'au niveau de l'élément d'étanchéité est disposé un dispositif de contrôle de fonctionnement (14).

11. Dispositif selon l'une des revendications mentionnées ci-dessus, caractérisé par le fait que l'élément d'étanchéité est disposé à une partie (3) du réservoir du bain d'eau où la surface nue d'eau est réduite.
